# EUROPÄISCHE PATENTANMELDUNG

(11) **EP 1 645 216 A2**
(43) Veröffentlichungstag der Anmeldung: **12.04.2006**
(21) Anmeldenummer: 05400029.4
(22) Anmeldetag: 16.09.2005
(51) Int. Cl.: A47J 37/07

(54) **Transportables, zusammenlegbares Grillgerät**

(30) Priorität: 07.10.2004 DE 202004015650 U
(71) Anmelder: Kuhne, Michael, 99423 Weimar (DE)
(72) Erfinder: Kuhne, Michael, 99423 Weimar (DE)
(74) Vertreter: Wagner, Gerd

(57) **Zusammenfassung**

Das erfindungsgemäße zusammenlegbare Grillgerät besitzt einen aus mehreren flachen Blechformteilen (4,5,10) zusammengesetzten Brenngutbehälter, auf den ein Grillrost (3) zur Aufnahme des Grillgutes aufgesetzt wird. Die als Seiten-, Stirnseiten- und Zwischenbleche ausgebildeten hitzebeständigen Blechformteile werden ausschließlich durch einfache Schlitz-/Steckverbindungen miteinander zusammengefügt.

## Beschreibung

Die Erfindung betrifft ein transportables, zusammenlegbares Grillgerät, im wesentlichen bestehend aus einem mit Brenngut, z.B. Holzkohle angefülltem Brenngutbehälter sowie einem darauf öffnungsseitig aufgesetzten Grillrost.

Grillgeräte sind seit langem bekannt. Wegen der Sperrigkeit und ihres großen Eigengewichtes sind sie jedoch für einen Transport, bspw. für die Mitnahme zu Campingzwecken oder anderen Freizeitbeschäftigungen nur bedingt geeignet.

Es wurden bereits mehrere konstruktive Lösungen für platzsparende, transportable Grilleinrichtungen vorgeschlagen, deren Auf- und Abbau auch vereinfacht werden konnte und die man bei Nichtgebrauch soweit zerlegen kann, dass sie nur noch einen geringen Platzbedarf haben. Auch erfordert deren Aufbau zumeist nur wenige Handgriffe, so dass die zur Montage benötigte Zeit gering bleibt. So besitzt das Grillgerät nach DE-GM 90 11 953 ein zusammenlegbares Grillgehäuse, welches aus trapezförmigen Einzelblechen besteht, die durch Scharniergelenkbänder miteinander verbunden sind. Weitere Einzelelemente werden mit Hilfe von Steckverbindungen montiert. Zusätzlich halten Schraubverbindungen die Wandbleche mit den Einzelelementen bei Nichtgebrauch oder Transport zusammen.

Andere Lösungsvorschläge verwenden, wie u.a. in EP 00 132 781 offenbart wird, für einen transportablen Grill eine Rahmenkonstruktion mit scherenartig zusammenklappbaren Rahmenteilen, in die mehrere Grillbleche sowie ein Grillrost eingehängt werden.

Wenn auch die vorbekannten Grillgeräte beim Transport nur einen geringen Platzbedarf benötigen und ihr Zusammenbau in der Regel auf einfache Weise erfolgen kann, so besitzen sie doch den Nachteil, dass für deren stabilen und funktionstüchtigen Aufbau noch zu viele Einzelteile erforderlich sind. Damit verbunden ist wiederum ein entsprechend höherer Fertigungs- und Kostenaufwand.

Es ist daher die Aufgabe der Erfindung, ein Grillgerät der eingangs genannten Art so weiterzubilden, dass es durch einen vereinfachten konstruktiven Aufbau die geschilderten Nachteile der zuvor beschriebenen Lösungen für Grillvorrichtungen vermeidet.

Erfindungsgemäß löst die Aufgabe eine Grillgerät mit einem Brenngutbehälter und einem öffnungsseitig darauf aufgesetzten Grillrost dadurch, dass der trichterförmige Brenngutbehälter aus mehreren flachen Blechformteilen zusammengesetzt ist, wobei diese ausschließlich durch Mittel zum Zusammenstecken leicht lösbar miteinander verbunden sind.
Weitere Ausgestaltungen der Erfindung sind der Gegenstand von mehreren Unteransprüchen.

Das erfindungsgemäße Grillgerät weist eine Reihe vorteilhafter Merkmale auf. So erfordert der Zusammenbau des Brenngutbehälters lediglich ein Zusammenstecken von sechs Blechformteilen miteinander. Dazu sind nur wenige Handgriffe notwendig. Bisher übliche Verschraubungen oder Schweißverbindungen können somit völlig entfallen. Weil die Blechformteile jeweils im Paar verwendet werden, müssen nur wenige, hinsichtlich ihrer Form nach unterschiedliche Blechteile für den Aufbau des Grills angefertigt werden. Auch lassen sich bei deren Fertigung Arbeitsschritte, wie etwa ein Biegeformen der Bleche, einsparen. Insgesamt wird durch die konstruktive Lösung gemäß der Erfindung die Herstellung derartiger Grillgeräte erheblich vereinfacht.
Von wesentlichem Vorteil sind auch die hohe Stabilität und Standfestigkeit des trichterförmigen Brenngutbehälters. Dieser läßt sich deshalb selbst während des Grillvorganges an einen anderen Aufstellungsort transportieren. Weil alle Einzelteile als flache Blechteile ausgebildet sind, wird bei Nichtgebrauch nur ein minimaler Platz beansprucht. So können z. B. die für den Aufbau eines Kleingrills mit einer Grillfläche von ca. 24 cm x 32 cm benötigten erfindungsgemäßen Blechformteile zusammen mit dem Grillrost bequem in einem DIN A4-Kuvert verwahrt werden.

Die Erfindung soll im folgenden anhand eines Ausführungsbeispieles näher erläutert werden. In den zugehörigen Zeichnungen zeigen:
Fig.1 eine perspektivische Darstellung eines aus sechs Blechformteilen zusammengesetzten Brenngutbehälters des erfindungsgemäßen Grillgerätes,
die Figuren 2 und 3 ein Grillgerät gemäß der Erfindung mit einer Grillgut-Ablage in unterschiedlichen Höhenverstellungen und
Fig. 4 bis 6 in Aufsicht jeweils die Darstellung eines Blechformteiles für ein Seiten-, ein Stirnseiten- und ein kammartig geformtes Zwischenblech.

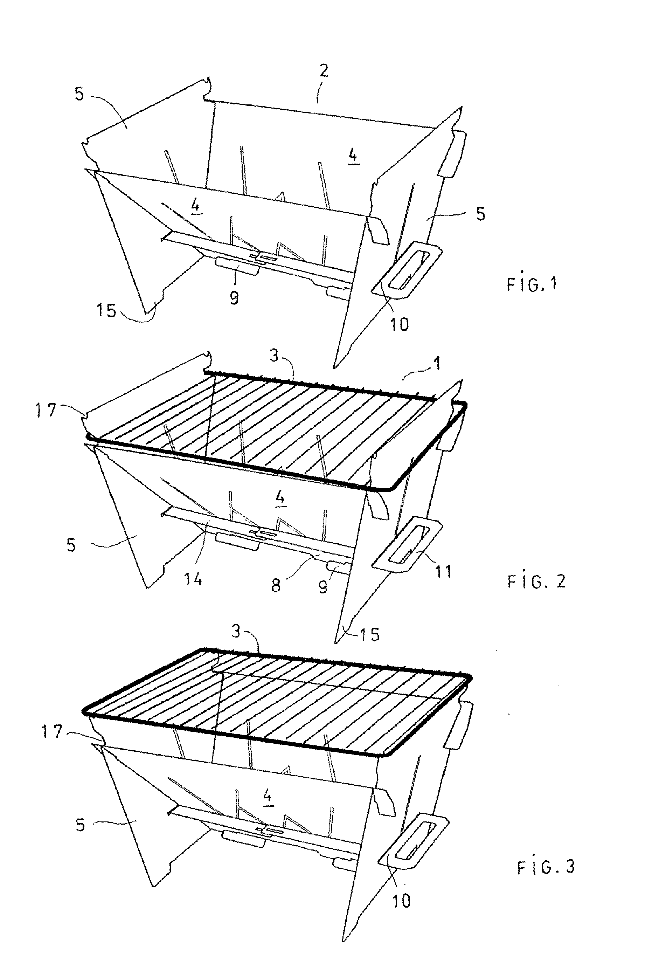

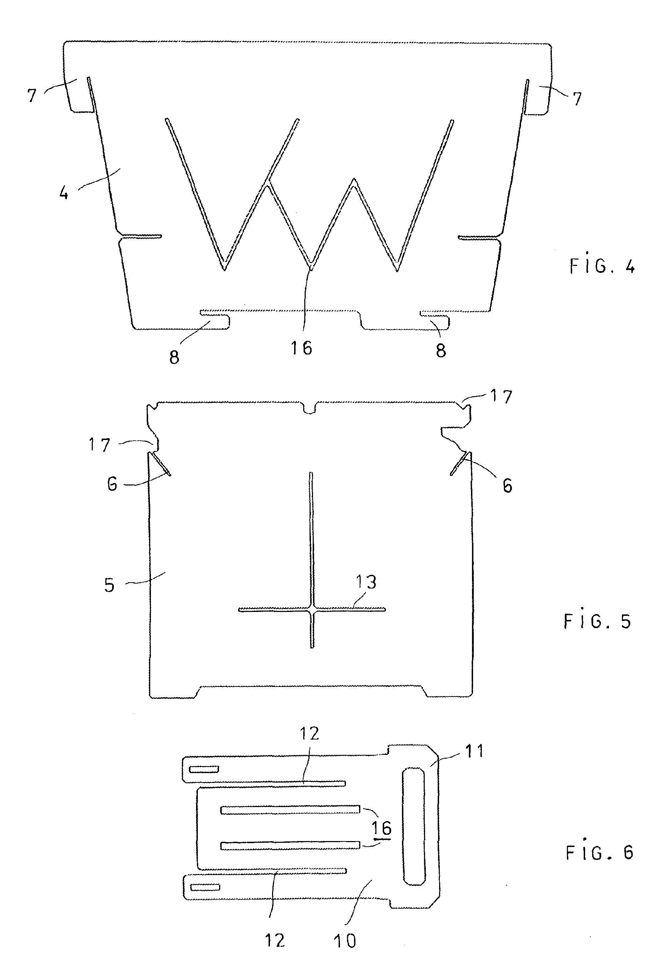

In Fig. 1 ist ein trichterförmiger Brenngutbehälter 2 für ein erfindungsgemäßes Grillgerät 1 nach Fig.2 dargestellt. Auf ihn wird öffnungsseitig ein Grillrost 3 aufgesetzt. Der Brenngutbehälter wird von sechs Blechformteilen, genauer von jeweils zwei einander formkongruenten Seitenblechen 4, Stirnseitenblechen 5 und Zwischenblechen 10 gebildet. Die beiden Seitenbleche 4 und die Stirnseitenbleche 5 sind als die Wandbleche des Brenngutbehälter jeweils einander gegenüberstehend angeordnet. Die Seitenbleche 4 besitzen Trapezform (Fig. 4) und sind dabei konisch aufeinander zulaufend und bodenseitig mit ihren Unterkanten zusammenstoßend angeordnet. Die beiden Stirnseitenbleche 5 besitzen Rechteckform und verlaufen in einer Weise senkrecht zu den Seitenblechen 4, dass diese mit ihren Seitenkanten an den aufeinander konisch zulaufenden Stirnseitenblechen 5 dicht anliegen und dadurch der Brenngutbehälter 2 die Gestalt eines nach oben offenen Dachprismas bzw. eine Trichtergestalt erhält. Als Material für die Blechformteile, einschließlich der Zwischenbleche, wird vorteilhafterweise ein Edelstahlblech, bspw. aus V2A-Stahl verwendet. Dieser zeichnet sich durch gute Temperaturbeständigkeit aus und trägt damit zur hohen Formbeständigkeit des Brenngutbehälters bei. Dessen Stabilität wird aber vor allem durch mehrfaches Ineinandergreifen der aneinanderstoßenden Seiten- und Stirnseitenbleche 4, 5 vermittels Schlitz-/Steckverbindungen bedingt. Hierzu sind öffnungsseitig in den Eckbereichen der Stirnseitenbleche 5 Schlitze 6 vorgesehen (Fig. 5), in die vorspringende, abgewinkelte Lappen 7, geformt aus den öffnungsseitigen Ecken der Seitenbleche 4, hakenartig eingreifen und über den Rand der Stirnseitenbleche 5 geschoben werden. Solchermaßen ausgeformte Lappen 8 sind auch bodenseitig an den Seitenblechen 4 angebracht, wobei stets ein Lappen 8 eines der Seitenbleche über einen hierfür vorgesehenen Lappen 9 des anderen Seitenbleches geschoben und dadurch eine feste Verbindung erreicht wird.
Die endgültige Formstabilität des Brenngutbehälters 2 sichern die zwei Zwischenbleche 10 mit Griffen 11 (Fig. 6). Jedes der Zwischenbleche mit zwei einseitig offenen Längsschlitzen 12 wird durch jeweils einen bodennah in die beiden Stirnseitenbleche 5 eingelassenen Horizontalschlitz 13 hindurchgesteckt, bis diese bündig aneinanderstoßend, einen Zwischenboden 14 zur Aufnahme des Brenngutes bilden. Gleichzeitig erfassen die kammartig gestalteten Zwischenbleche 10 die in die Längsschlitze 12 eingeschobenen Seitenbleche 4 und gewährleisten dadurch den sicheren Verbund der den Brenngutbehälter bildenden Blechformteile.
Bodenseitig sind die Unterkanten der Stirnseitenbleche 5 als Füße 15 ausgebildet, die den sicheren Stand des Grillgerätes gewährleisten. Die Zwischenbleche 10 sowie die Seitenbleche 4 besitzen zudem schlitzartige Durchbrechungen 16, die für die ausreichende Luftzufuhr an das Brenngut vorgesehen sind, aber auch ein Verformen der Seitenbleche bei ungleichmäßigem Temperatureintrag während des Abbrennens des Brenngutes verhindern sollen.
In an sich bekannter Weise besteht der Grillrost 3 aus einem rechteckigen Metallrahmen, auf den eine Anzahl Metallstäbe aufgeschweißt sind. Er wird auf den Brenngutbehälter 2 öffnungsseitig aufgesetzt und zudem gegen horizontale Bewegungen festgelegt. Hierzu sind in den Stirnseitenblechen 5 Einschnitte 17 vorhanden, in die der Metallrahmen eingelegt werden kann. Indem man Einschnitte unterschiedlicher Höheneinstellung an den Stirnseitenblechen anbringt, läßt sich der Abstand zwischen der Glutzone des Brenngutes und Grillgut-Auflage in Stufen variieren. (Fig. 2 und 3).

## Patentansprüche

1. Transportables, zusammenlegbares Grillgerät mit einem Brenngutbehälter (2) und einem darauf aufgesetzten Grillrost (3),
**dadurch gekennzeichnet, dass** der Brenngutbehälter aus flachen Blechformteilen (4,5,10) besteht, die trichterförmig zusammengesetzt sind, wobei die einzelnen Blechformteile ausschließlich durch Mittel zum Zusammenstecken (6,7,8,9,10, 12) lösbar miteinander verbunden sind.

2. Transportables Grillgerät nach Anspruch 1,
**dadurch gekennzeichnet, dass** der trichterförmige Brenngutbehälter (2) aus jeweils zwei konisch zu seiner Bodenfläche hin verlaufenden, trapezförmigen Seitenblechen (4) und dazu senkrecht ausgerichteten rechteckförmigen Stirnseitenblechen (5) zusammengefügt ist, wobei darin bodenseitig zwei kammartig geformte und horizontal einschiebbare Zwischenbleche (10) eine Brenngutablage (14) bilden, und dass aneinander angrenzende Seiten-, Stirnseiten- sowie Zwischenbleche vermittels Schlitz-/Steckverbindungen lösbar miteinander verbunden sind.

3. Transportables Grillgerät nach Anspruch 2,
**dadurch gekennzeichnet, dass** jeweils die beiden Seiten-, die Stirnseiten- sowie die Zwischenbleche untereinander formkongruente Blechformteile sind.

4. Transportables Grillgerät nach einem oder mehreren der vorhergehenden Ansprüche,
**dadurch gekennzeichnet, dass** der Grillrost (3) in Einschnitten (17) des Brenngutbehälters stufenweise höhenverstellbar geführt ist.

5. Transportables Grillgerät nach einem oder mehreren der vorhergehenden Ansprüche,
**dadurch gekennzeichnet, dass** die Blechformteile des Brenngutbehälters sowie der Grillrost aus Stahl, Edelstahl, Titan oder einem anderen hitzebeständigen Material gefertigt sind.
